# EUROPEAN PATENT SPECIFICATION

(11) **EP 1 261 223 B1**
(45) Date of publication and mention of the grant of the patent: **29.03.2006**
(21) Application number: 02008458.8
(22) Date of filing: 13.04.2002
(51) Int. Cl.: H04Q 7/22

(54) **Apparatus and method for controlling access to positional information of a mobile station**
Vorrichtung und Verfahren zur Kontrolle des Zugriffs auf Positionsinformationen eines Mobilgerätes
Appareil et procédé de contrôle d'accès aux informations de position d'un terminal mobile

(30) Priority: 18.05.2001 US 860228
(43) Date of publication of application: 27.11.2002
(73) Proprietor: ALCATEL, 75008 Paris (FR)
(72) Inventor: Dyer, William, Plano, TX 75025 (US)
(74) Representative: Rausch, Gabriele

(56) References cited:
- WO-A-98/52379
- US-B1- 6 226 589
- PATENT ABSTRACTS OF JAPAN vol. 1998, no. 11, 30 September 1998 (1998-09-30) & JP 10 170625 A (NIPPON TELEGR &TELEPH CORP <NTT>), 26 June 1998 (1998-06-26)

## Description

The present invention relates generally to a manner by which to permit controlled access to positional indicia associated with a mobile station. More particularly, the present invention relates to apparatus, and an associated method, by which to control the granularity at which the positional indicia associated with a mobile station is permitted to be accessed by a content provider. The precision at which the positional information of the mobile station is permitted to be accessed is dependent upon the identity of the content provider. Privacy concerns associated with positional information of the location of a user of a mobile station are alleviated.

### BACKGROUND OF THE INVENTION

The use of cellular, and other radio, communication systems by which to communicate both voice and nonvoice data has achieved wide popularity in recent years. Network infrastructures of cellular, and other, radio communication systems have been installed throughout many of the populated areas of the world to provide for the effectuation of radio communications therethrough. In a cellular communication system, typically, communications are effectuated through the use of a mobile station, a radio transceiver carried by a user. When the mobile station is positioned within coverage areas of the network infrastructure of the communication system, radio communications between the mobile station and the network infrastructure are generally permitted.

Mobile stations are generally constructed to mimic operation of conventional, telephonic devices. That is to say, mobile stations are generally constructed to permit a user to communicate voice, and well as nonvoice, data in manners corresponding to the manners by which a conventional, telephonic station is utilized.

As communications with the mobile stations are effectuated by way of radio links, communication mobility is inherently permitted when communications are effectuated by way of a mobile station. As a result, telephonic communications are effectuable through use of a mobile station at locations in which communications effectuated by way of a conventional wireline communication system would be impractical or impossible.

While communications effectuated by way of a mobile station operable in a cellular, or other radio, communication system advantageously permits communications when the use of conventional wireline telephonic devices cannot be used, the mobility inherent of a conventional mobile station does not provide for simple tracking of the location at which the mobile station is positioned. Tracking of the location at which the mobile station is positioned can be of critical importance, such as, for instance, when a request is made for emergency assistance.

If the user of the mobile station requests emergency assistance at a location proximate to the position at which the mobile station is located, but is unable to identify the location to which emergency personnel are to respond to the request, the emergency assistance personnel are unable to adequately respond to the request.

In contrast, if the request for emergency assistance is, instead, originated at conventional wireline device, the geographic position from which the call is originated is easily determinable. Emergency personnel are able to perform a simple mapping of the identity of the wireline device at which the call is originated together with the location at which the device is installed. Thereby, an accurate indication of the location in which the call is originated is made available to the emergency personnel, irrespective of the ability of the calling party to provide directional instructions.

Due to the inherent mobility of a mobile station, the geographical position at which a call is originated by the calling party through the use of a mobile station is not readily determinable.

Regulatory bodies have set forth requirements for the manufacturers of cellular communication equipment to provide a mechanism, and communications equipment to implement the mechanism, which permit the position of a mobile station to be determinable.

One proposal by which to comply with the requirement makes use of GPS (global positioning system) technologies. GPS receivers are available to receive and to detect TOA (time of arrival) signals generated by satellite-based GPS transmitters. A mobile station which incorporates a GPS receiver together with the transceiver circuitry of which a mobile station is conventionally formed permits the location at which the mobile station is positioned to be determined, and indicia of the position to be sent elsewhere. Thereby, the network infrastructure of the communication system is provided with the position information to comply with the regulatory requirements.

Other proposals have been made by which to determine the position of a mobile station in other manners, such as, for instance, by network triangulation or address lookup.

While the requirements set forth by the regulatory bodies, for requiring the communications equipment to provide for the determination of the positioning indicia is predicated upon the need to provide such indicia to emergency authorities, such information can also be used for other purposes. While many of the other purposes for which of use of the positional indicia benefits the user of the mobile station, issues related to need to protect the privacy of users of the mobile stations have been raised. If unlimited access to the positional indicia is permitted, privacy concerns of the users of the mobile stations can not be alleviated.

A manner is needed by which to limit access to the positional indicia associated with the positioning of the mobile station while still permitting controlled access to the positional indicia, thereby to provide additional services to users of mobile stations in a cellular, or other radio, communication system.

JP 10 170625A describes a representation scheme storage accommodating a plurality of representation schemes of location information with different displaying accuracy and relations between each representation scheme and a communicating user.

WO 98 52379A discloses an integrity protection mechanism of a mobile communications system, wherein an authorization check is carried out in conjunction with a request for determination of the geographical location of a mobile station. The geographical location is only determined when authorization is found for the mobile station to be located.

It is in light of this background information related to the use of positional indicia identifying the positioning of a mobile station operable in a radio communication system that the significant improvements of the present invention have evolved.

### SUMMARY OF THE INVENTION

The present invention, accordingly, advantageously provides apparatus, and an associated method, by which to permit access to positional indicia associated with a mobile station in a controlled manner.

Through operation of an embodiment of the present invention, a manner is provided by which to control the granularity at which the positional indicia associated with the mobile station is permitted to be accessed by a content provider.

A profile associated with a mobile station is created. The profile indexes content provider identity indicia together with levels of granularity. The levels of granularity define the precision of the positional indicia which is permitted to be accessed by the content provider. By controlling the level of granularity of the positional indicia permitted to be accessed by a content provider, a user of a mobile station is able selectably to maintain a desired level of privacy relating to the position of the user.

In one aspect of the present invention, a profile database is maintained at a storage element, located at, for instance, a server connected to the internet, or other packet data backbone. The profile database includes, with respect to a particular mobile station, identity indicia associated with one or more content providers together with the levels of precision at which the corresponding content provider is permitted to access positional indicia associated with the positioning of the mobile station. Positional indicia identifying the positioning of the mobile station is also maintained at the profile database.

In another aspect of the present invention, the profile maintained at the profile database is created by a user of the mobile station. The profile is, e.g., created remote from the storage element in which the profile database is maintained. The profile is created, for instance, through appropriate actuation of the user interface located at the mobile station.

The user of the mobile station enters the identity of the content provider, such as the WWW address of the content provider, and the selected level of granularity to be associated with the content provider. A user interface of the mobile station detects user actuation of the user actuator and creates a profile message. The profile message is communicated upon a radio link and through the network portion of the communication system in which the mobile station is operable, and to the server, or other device, at which the storage element is located and at which the profile database is to be maintained. Alternately, the profile message is created elsewhere, such as at a network station coupled to the internet, or other network backbone to which the profile message is routed.

In another aspect of the present invention, once the profile database is created, positional indicia of the mobile station is provided thereto, at least at selected intervals. Thereby, a profile database is created and maintained which includes, with respect to a particular mobile station, positional indicia identifying positioning of the mobile station, as well as content provider identity indicia together with levels of granularity at which the content provider is permitted to access the positional indicia.

In another aspect of the present invention, a translator is provided for translating the positional indicia to the appropriate level of granularity when a request is made for the positioning of the mobile station. If the level of granularity of the positional indicia permitted to be accessed by a requesting content provider is less than the granularity of the positional indicia maintained at the profile database, the translator translates the granularity of the positional indicia into the permitted level of granularity.

When a content provider is to, or is requested to, download data to the mobile station, a message is first sent to the location at which the profile database is maintained. Responsive to the request, a determination is made of whether, and at a what level, the content provider identified in the request is permitted access to the positional indicia of the mobile station. And, responsive to the determination, positional indicia, at the appropriate level of granularity, is returned to the content provider. The data which is to be downloaded to the mobile station is determined, at least in part, responsive to the positional indicia returned to the content provider. The content is then downloaded to the mobile station.

In these and other aspects, therefore, an assembly, and an associated method, is provided for a radio communication system having a network portion and a mobile station moveable through a geographical area. Positioning of the mobile station is identifiable at a first level of precision. Indicia associated with the positioning of the mobile station at a selected level of precision is selectably permitted to be accessed by at least a first correspondent node. A profile storage element is coupled to the network portion of the radio communication system. The profile storage element stores a profile database in which indicia identifying the at least the first correspondent node together with the selected level of precision by which the positioning of the mobile station is permitted to be accessed by the at least the first correspondent node is stored.

A more complete appreciation of the present invention and to the scope thereof can be obtained from the accompanying drawings which are briefly summarized below, the following detailed description of the presently preferred embodiments of the invention, and the appended claims.

### BRIEF DESCRIPTION OF THE DRAWINGS

Figure 1 illustrates a functional block diagram of a communication system in which an embodiment of the present invention forms a portion to be operable therein.
Figure 2 illustrates a profile database formed during operation of an embodiment of the present invention.
Figure 3 illustrates a message sequence diagram representative of exemplary signaling generated during operation of an embodiment of the present invention embodied in the communication system shown in Figure 1.
Figure 4 illustrates a method flow diagram listing the method of operation of an embodiment of the present invention.

### DETAILED DESCRIPTION OF THE INVENTION

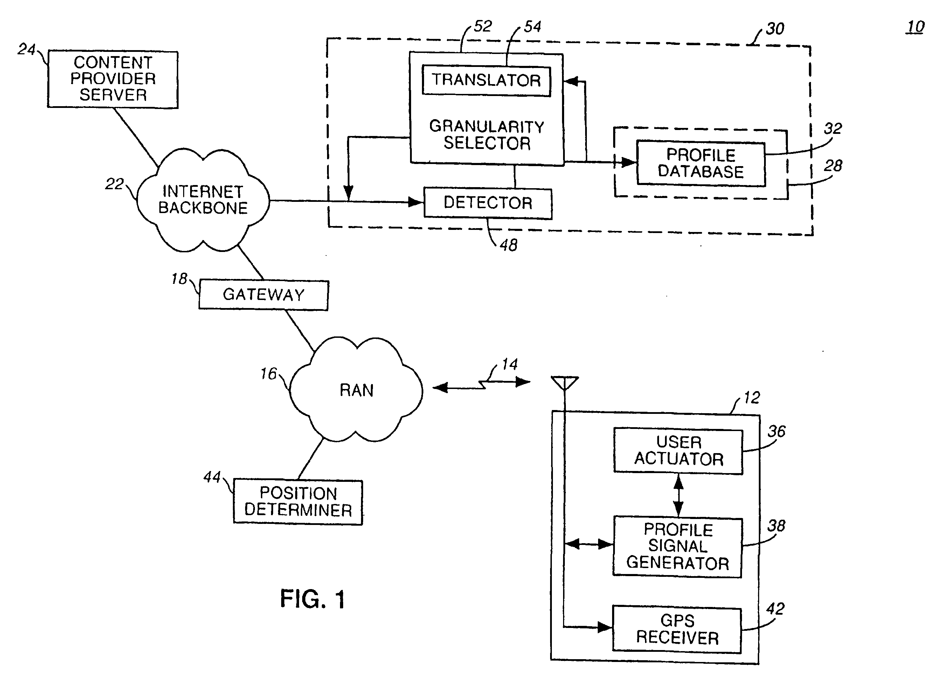

Referring first to Figure 1, a communication system, shown generally at 10, provides for radio communications with a mobile station 12. Here in the exemplary implementation, the mobile station 12 forms a cellular mobile station operable pursuant to a conventional cellular communication standard, such as a GSM (global system for mobile communications) standard, an IS-2000 CDMA (interim standard 2000 code-division, multiple-access) standard, or other conventional standard.

Data originated, or terminated, at the mobile station are communicated by way of a radio link 14 with a radio access network, (RAN) 16. The radio access network 16 forms the fixed network infrastructure of the cellular communication system with which the mobile station communicates. While not separately shown, the radio access network typically includes a plurality of base transceiver stations, each of which is capable of communicating with the mobile station when the mobile station and the base station are positioned within respective coverage areas of each other. Groups of the base transceiver stations are, in turn, coupled to a base station controller, or other radio network controller. The base station controllers are coupled to a switching center or service node.

The radio access network is connected, here by way of a gateway 18, with a packet data network, here the internet backbone 22. Content providers, of which the content provider server 24 is exemplary, are coupled to the internet backbone. The content provider servers are exemplary of correspondent nodes which correspond with the mobile station. The content provider 24 generates packetized data forming the content which is communicated to other devices, here including the mobile station 12. The content provider is also representative of an application provider and a service provider which provide applications and service in addition to, or alternative to, the content provided by the content provider.

The content provided by the content provider 24 pursuant to operation of an embodiment of the present invention, is dependent upon the location at which the mobile station is indicated to be positioned. That is to say, the content provided by the content provider 24 is position-dependent. A storage element 28, here also embodied at a server 30, is also connected to the internet backbone 22. The storage element is operable to store data forming a database 32 which is maintained thereat. The profile database maintained at the storage element includes a profile of mobile stations, such as the mobile station 12. The profile includes positional indicia associated with the mobile station, identity indicia associated with correspondent nodes including content providers, such as the content provider 24, together with a level of granularity that the content provider, or other correspondent node, is permitted to access the positional indicial associated with the mobile station.

In the exemplary implementation, the data maintained at the profile database includes data defining the identity indicia of the correspondent nodes and the levels of granularity permitted of the access to the positional indicia. The data forming the profile database is created by a user of the mobile station 12 through actuation of a user actuator 36. The user actuator is here shown to be coupled to a profile signal generator 38. The profile signal generator generates, responsive to actuation of the user actuator, a profile signal which is transmitted upon the radio link. The profile signal is routed through the radio access network portion, and the internet backbone for delivery to the storage element 28 to be stored at the database maintained thereat. Alternately, and as indicated by the block 38 representative of a communication station connected to the internet backbone, a user is able instead to create the profile signal through appropriate actuation of the communication station 38.

The positional indicia also maintained at the profile database is generated, in one implementation, by a GPS (global positioning system) receiver 42 located at the mobile station. In another implementation, the positional indicia is determined at the radio access network of the communication system, such as through use of triangulation techniques. In the other implementation, the position determiner is indicated by the element 44.

Once the profile is created, and the positional indicia is updated, as appropriate, a correspondent node, such as the content provider 24, requests access to the positional indicia associated with a mobile station when content is to be downloaded thereto. When the request is received at the server at which the storage element 28 is located, a detector 48 detects the request.

The detector is coupled to a granularity selector 52 which is operable responsive to detection by the detector of the request. The granularity selector accesses the data contained at the profile database. Responsive to the level of granularity associated with the identity of the content provider, or other correspondent node, requesting the positional indicia, the granularity selector selects the level of granularity at which the positional indicia is permitted to be accessed. The granularity selector also includes a translator 54 which translates the positional indicia associated with the mobile station to which the content is to be communicated at translates the positional indicia to be of the granularity permitted to be accessed by the requesting device. The positional indicia is then provided to the requesting device.

The content provided by the content provider is selected responsive to the positional indicia provided thereto. As the level of granularity of the positional indicia is controlled, the position of the location at which the mobile station is positioned can be limited, as desired. Privacy concerns associated with providing a content provider or other node are assuaged.

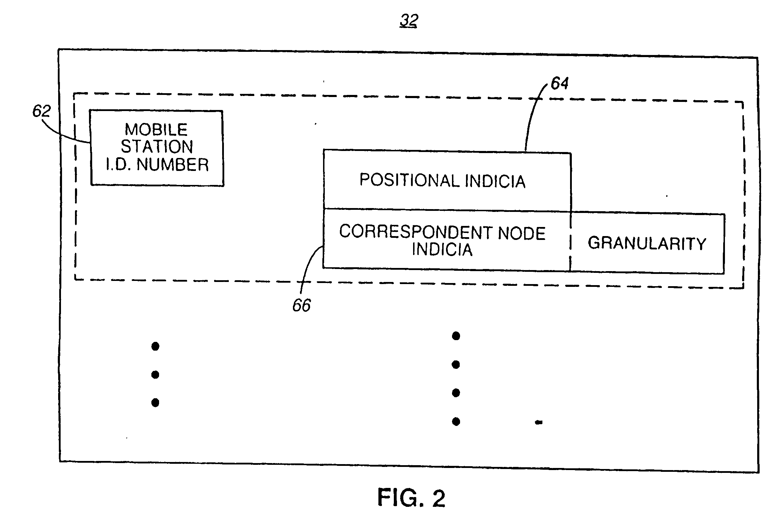

Figure 2 illustrates the profile database 32 maintained at the storage element 28 of an embodiment of the present invention. Here, a profile is created for a mobile station, indicated by an identifier 62. The positional indicia is also stored together with the mobile station identifier, here indicated at 64.

Correspondent nodes 66 are also listed, together with granularities to be associated with the correspondent nodes. The correspondent nodes are identified by identity indicia which identify the correspondent node individually. Or, the identity indicia can identify the correspondent node by a selected class. For instance, different content providers providing similar types of content can be categorized into a signal group or set and assigned with a common identifier.

The level of granularity defines the level of precision by which the positional indicia is provided to a requestor. The granularity can correspond, in one extreme, to the precision of the positional indicia as provided by the position detection mechanism of the communication system, thereby to permit positioning of the mobile station to the greatest extent possible. At another extreme, the level of granularity permits such limited access to the position indicia to prevent content provider from obtaining meaningful position indicia associated with the mobile station. Additional, or other, information is also storable at the profile database.

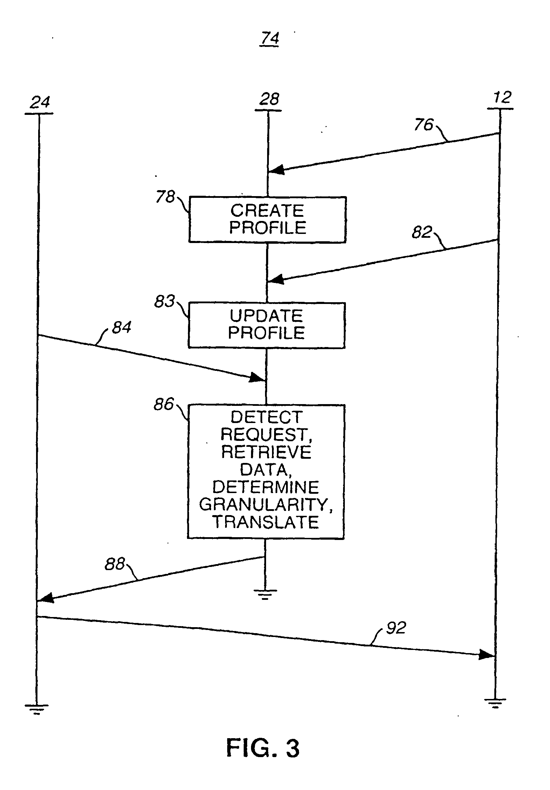

Figure 3 illustrates a message sequence diagram, shown generally at 74 which is representative of exemplary signaling generated during operation of the communication system 10. First, and as indicated by the segment 76, a profile message is generated by the mobile station 12 and sent to the server at which the storage element 28 is located. The profile associated with the mobile station is created as indicated by the block 78. And, as indicated by the segment 82, updates to the position indicia are also provided to the storage element. Updates to the profile are made, as appropriate, indicated by the block 83. Subsequently, and as indicated by the segment 84, the content provider 24 requests access to the positional indicia associated with the mobile station 12. The request is sent to storage element at which the profile database is maintained. Detection, retrieval, and determination operations are performed and translation of the granularities of the position indicia are also performed, as appropriate, indicated by the block 86. The positional indicia, translated as appropriate into the appropriate level of granularity is returned, indicated by the segment 88, to the content provider. The content is then, as indicated by the segment 92, routed to the mobile station.

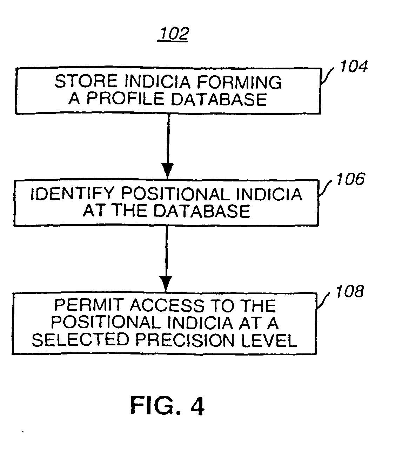

Figure 4 illustrates a method flow diagram, shown generally at 102, of the method of operation of an embodiment of the present invention. The method selectably permits indicia associated with positioning of a mobile station at a selected level of precision to be accessed by a correspondent node.

First, and as indicated by the block 104, a profile database is stored to include indicia identifying the first correspondent node together with a selected level of precision by which the positioning of the mobile station is permitted to be accessed by the correspondent node.

Then, and as indicated by the block 106, positional indicia identifying the positioning of the mobile station at a first level of precision is also maintained at the profile database.

Finally, and as indicated by the block 108, access to the positional indicia is selectably permitted of the first correspondent node. The access is permitted at the selected level of precision identified in the profile database to be associated with the correspondent node.

Thereby, a manner is provided by which to control the granularity at which positional indicia associated with the mobile station is to be accessed by a content provider.

The previous descriptions are of preferred examples for implementing the invention, and the scope of the invention should not necessarily be limited by this description. The scope of the present invention is defined by the following.

## Claims

1. A radio communication system (10) having a network portion and a mobile station (12) movable throughout a geographical area; the mobile station (12) comprising: a user actuator (36) being actuable to select indicia including a selected level of precision by which the positioning of the mobile station is permitted to be accessed by a first correspondent node (24); and a profile creation signal generator (38) coupled to said user actuator (36), said generator (38) for generating a profile creation signal being communicated via said network portion to a profile database (32) of a profile storage element (28) for storing the indicia represented by said profile creation signal, **characterized in that** said indicia include identification of at least said first correspondent node (24) together with said selected level of precision.

2. Radio communication system (10) according to claim 1, wherein said profile storage element (28) is coupled to the network portion of the radio communication system (10).

3. Radio communication system (10) according to claim 1 or 2, wherein said profile storage element (28) is further adapted to receive indications of the positioning of the mobile station (12) identified at the first level of precision, said profile storage element (28) being further for storing at the profile database (32) positional indicia identifying the positioning of the mobile station (12).

4. Radio communication system (10) according to claim 3, wherein the profile database (32) stored at said profile storage element (28) is selectably accessible by at least the first correspondent node (24) to access, at the selected level of precision associated with at least the first correspondent node (24), the positional indicia identifying the positioning of the mobile station (12).

5. Radio communication system (10) according to claim 4, further comprising a granularity selector (52) coupled to said profile storage element (28) and adapted to receive indicia of a request by at least the first correspondent node (24) to access the positional indicia identifying the positioning of the mobile station (12), said granularity selector (52) for indicating the selected level of precision by which the positioning of the mobile station (12) is permitted to be accessed by at least the first correspondent node (24).

6. Radio communication system (10) according to claim 5, wherein the indications of the positioning of the mobile station (12) identified at the first level of precision are maintained at the profile database (32) stored at said profile storage element (28) and wherein said granularity selector (52) is adapted to granularize the indications of the positioning of the mobile station (12) to permit at least the first correspondent node (24) to access the positional indicia at the selected level of precision associated with at least the first correspondent node (24) maintained at the profile database (32).

7. Radio communication system (10) according to claim 6, wherein said granularity selector (52) further includes a translation (54) for translating the positional indicia, maintained at the profile database (32) at the first level of precision, into positional indicia at the selected level of precision.

8. Radio communication system (10) according to claim 1, wherein the at least said first correspondent node (24) comprises the first correspondent node (24) and at least a second correspondent node, and wherein the profile database (32) stored at said profile storage element (28) includes indicia identifying the first correspondent node (24) together with the selected level of precision permitted thereof and indicia identifying the second correspondent node together with the selected level of precision permitted thereof.

9. Radio communication system (10) according to claim 1, wherein at least the first correspondent node (24) comprises the first correspondent node (24) and at least a second correspondent node, wherein the first correspondent node (24) is adapted to form a member of a first correspondent-node set and the second correspondent node is adapted to form a member of a second correspondent-node set and wherein the indicia stored at the profile database (32) maintained by said profile storage element (28) comprises indicia identifying the first and at least second correspondent nodes, respectively, stored in terms of the first correspondent-node set and the second correspondent-node set.

10. Radio communication system (10) according to claim 9, wherein at least the first correspondent node (24) is selectably permitted access to the indicia associated with the first correspondent node set through generation of an access request (84) therefor.

11. Radio communication system (10) according to claim 10, further comprising an access request detector (48) coupled to said profile storage element (28), said access request detector (48) for detecting the access request (84) generated by at least the first correspondent node (24).

12. Radio communication system (10) according to claim 11, wherein said access request detector (48) is further adapted to selectably permit access of at least the first correspondent node (24) to the indicia stored at the profile database (32) maintained at said profile storage element (28).

13. Radio communication system (10) according to claim 12, wherein the access to the indicia stored at the profile database (32) selectably permitted by said access request detector (48) is made responsive to values of the selected level of precision stored at the profile database (32) which is adapted to identify the selected level of precision by which the positioning of the mobile station (12) is permitted to be accessed.

14. Radio communication system (10) according to claim 1, wherein the selected level of precision by which the positioning of the mobile station (12) is permitted to be accessed is a lesser level of precision than the first level of precision.

15. Method for communicating in a radio communication system (10) having a network portion and a mobile station (12) moveable throughout a geographical area, wherein indicia including a selected level of precision by which the positioning of the mobile station (12) is permitted to be accessed by a first correspondent node (24) are stored at a profile database (32), wherein positional indicia identifying the positioning of the mobile station (12) at a first level of precision are maintained, and wherein access by said first correspondent node (24) to indicia associated with the positioning of the mobile station (12) is selectably permitted at a selected level of precision, **characterized in that** indicia identifying the at least first correspondent node (24) is stored together with said selected level of precision.

16. The method of claim 15, comprising the additional operation of translating (86) the positional indicia, maintained at the first level of precision, into positional indicia at the selected level of precision.

17. The method of claim 16, further comprising the operation of generating, at the first correspondent node (24), a request (84) to access the positional indicia associated with the mobile station (12).

18. The method of claim 17, further comprising the operation, responsive to access by the first correspondent node (24) of the positional indicia, of generating, at the first correspondent node (24), a message (92) for communication to the mobile station (12), the message (92) of values responsive to the positional indicia.

## Patentansprüche

1. Funkkommunikationssystem (10), das einen Netzabschnitt und ein Mobilgerät (12) aufweist, das durch ein geografisches Gebiet beweglich ist; wobei das Mobilgerät (12) umfasst: ein Benutzerbetätigungselement (36), das betätigbar ist, um Hinweise auszuwählen, die ein ausgewähltes Genauigkeitslevel beinhalten, nach dem der Zugriff auf die Positionsbestimmung des Mobilgeräts durch einen ersten Korrespondenzknoten (24) gestattet ist; und einen Profilerstellungssignalgenerator (38), der mit dem Benutzerbetätigungselement (36) gekoppelt ist, der Generator (38) zum Generieren eines Profilerstellungssignals, das über den Netzabschnitt zu einer Profildatenbank (32) eines Profilspeicherelements (28) zum Speichern der Hinweise übermittelt wird, die durch das Profilerstellungssignal repräsentiert sind, **dadurch gekennzeichnet, dass** die Hinweise die Identifikation mindestens des ersten Korrespondenzknotens (24) zusammen mit dem ausgewählten Genauigkeitslevel beinhalten.

2. Funkkommunikationssystem (10) nach Anspruch 1, wobei das Profilspeicherelement (28) mit dem Netzabschnitt des Funkkommunikationssystems (10) gekoppelt ist.

3. Funkkommunikationssystem (10) nach Anspruch 1 oder 2, wobei das Profilspeicherelement (28) ferner ausgeführt ist, Anzeigen der Positionsbestimmung des Mobilgeräts (12) zu empfangen, die auf dem ersten Genauigkeitslevel identifiziert sind, wobei das Profilspeicherelement (28) ferner zum Speichern von Positionshinweisen, die die Positionsbestimmung des Mobilgeräts (12) identifizieren, in der Profildatenbank (32) ist.

4. Funkkommunikationssystem (10) nach Anspruch 3, wobei auf die Profildatenbank (32), die am Profilspeicherelement (28) gespeichert ist, durch mindestens den ersten Korrespondenzknoten (24) auswählbar zugegriffen werden kann, um auf dem ausgewählten Genauigkeitslevel, das mindestens dem ersten Korrespondenzknoten (24) zugeordnet ist, auf die Positionshinweise zuzugreifen, die die positionsbestimmung des Mobilgeräts (12) identifizieren.

5. Funkkommunikationssystem (10) nach Anspruch 4, das ferner einen Granularitätswähler (52) umfasst, der mit dem Profilspeicherelement (28) gekoppelt und ausgeführt ist, Hinweise einer Anforderung durch mindestens den ersten Korrespondenzknoten (24) zu empfangen, um auf die Positionshinweise zuzugreifen, die die Positionsbestimmung des Mobilgeräts (12) identifizieren, der Granularitätswähler (52) zum Anzeigen des ausgewählten Genauigkeitslevels, nach dem der Zugriff auf die Positionsbestimmung des Mobilgeräts (12) durch mindestens den ersten Korrespondenzknoten (24) gestattet ist.

6. Funkkommunikationssystem (10) nach Anspruch 5, wobei die Anzeigen der Positionsbestimmung des Mobilgeräts (12), die auf dem ersten Genauigkeitslevel identifiziert wurden, in der Profildatenbank (32) unterhalten werden, die am Profilspeicherelement (28) gespeichert ist, und wobei der Granularitätswähler (52) ausgeführt ist, die Anzeigen der Positionsbestimmung des Mobilgeräts (12) zu granularisieren, um es mindestens dem ersten Korrespondenzknoten (24) zu gestatten, auf die Positionshinweise auf dem ausgewählten Genauigkeitslevel zuzugreifen, das mindestens dem ersten Korrespondenzknoten (24) zugeordnet ist, der in der Profildatenbank (32) unterhalten wird.

7. Funkkommunikationssystem (10) nach Anspruch 6, wobei der Granularitätswähler (52) ferner einen Übersetzer (54) zum Übersetzen der Positionshinweise, die in der Profildatenbank (32) auf einem ersten Genauigkeitslevel unterhalten werden, in Positionshinweise auf dem ausgewählten Genauigkeitslevel beinhaltet.

8. Funkkommunikationssystem (10) nach Anspruch 1, wobei der mindestens der erste Korrespondenzknoten (24) den ersten Korrespondenzknoten (24) und mindestens einen zweiten Korrespondenzknoten umfasst, und wobei die Profildatenbank (32), die am Profilspeicherelement (28) gespeichert ist, Hinweise, die den ersten Korrespondenzknoten (24) zusammen mit dem ausgewählten, für diesen zulässigen Genauigkeitslevel identifizieren, und Hinweise beinhaltet, die den zweiten Korrespondenzknoten zusammen mit dem ausgewählten, für diesen zulässigen Genauigkeitslevel identifizieren.

9. Funkkommunikationssystem (10) nach Anspruch 1, wobei mindestens der erste Korrespondenzknoten (24) den ersten Korrespondenzknoten (24) und mindestens einen zweiten Korrespondenzknoten umfasst, wobei der erste Korrespondenzknoten (24) ausgeführt ist, ein Element eines ersten Korrespondenzknotensatzes zu bilden, und der zweite Korrespondenzknoten ausgeführt ist, ein Element eines zweiten Korrespondenzknotensatzes zu bilden, und wobei die Hinweise, die in der Profildatenbank (32) gespeichert sind, die durch das Profilspeicherelement (28) unterhalten wird, Hinweise umfassen, die die ersten bzw. mindestens zweiten Korrespondenzknoten identifizieren, gespeichert hinsichtlich des ersten Korrespondenzknotensatzes und des zweiten Korrespondenzknotensatzes.

10. Funkkommunikationssystem (10) nach Anspruch 9, wobei mindestens dem ersten Korrespondenzknoten (24) durch Generierung einer Zugriffanforderung (84) dafür auswählbar Zugriff auf die Hinweise gestattet ist, die dem ersten Korrespondenzknotensatz zugeordnet sind.

11. Funkkommunikationssystem (10) nach Anspruch 10, das ferner einen Zugriffanforderungsdetektor (48) umfasst, der mit dem Profilspeicherelement (28) gekoppelt ist, der Zugriffanforderungsdetektor (48) zum Detektieren der Zugriffanforderung (84), die durch mindestens den ersten Korrespondenzknoten (24) generiert ist.

12. Funkkommunikationssystem (10) nach Anspruch 11, wobei der Zugriffanforderungsdetektor (48) ferner ausgeführt ist, auswählbar Zugriff mindestens des ersten Korrespondenzknotens (24) auf die Hinweise zu gestatten, die in der Profildatenbank (32) gespeichert sind, die am Profilspeicherelement (28) unterhalten wird.

13. Funkkommunikationssystem (10) nach Anspruch 12, wobei der Zugriff, der auswählbar durch den Zugriffanforderungsdetektor (48) gestattet ist, auf die Hinweise, die in der Profildatenbank (32) gespeichert sind, in Reaktion auf Werte des ausgewählten Genauigkeitslevels erfolgt, die in der Datenbank (32) gespeichert sind, die ausgeführt ist, das ausgewählte Genauigkeitslevel zu identifizieren, nach dem der Zugriff auf die Positionsbestimmung des Mobilgeräts (12) gestattet ist.

14. Funkkommunikationssystem (10) nach Anspruch 1, wobei das ausgewählte Genauigkeitslevel, nach dem der Zugriff auf die Positionsbestimmung des Mobilgeräts (12) gestattet ist, ein niedrigeres Genauigkeitslevel als das erste Genauigkeitslevel ist.

15. Verfahren zum Kommunizieren in einem Funkkommunikationssystem (10), das einen Netzabschnitt und ein Mobilgerät (12) aufweist, das durch ein geografisches Gebiet beweglich ist, wobei Hinweise, die ein ausgewähltes Genauigkeitslevel beinhalten, nach dem der Zugriff auf die Positionsbestimmung des Mobilgeräts (12) durch einen ersten Korrespondenzknoten (24) gestattet ist, in einer Profildatenbank (32) gespeichert sind, worin Positionshinweise, die die Positionsbestimmung des Mobilgeräts (12) auf einem ersten Genauigkeitslevel identifizieren, unterhalten werden und worin Zugriff durch den ersten Korrespondenzknoten (24) auf Hinweise, die der Positionsbestimmung des Mobilgeräts (12) zugeordnet sind, auf einem ausgewählten Genauigkeitslevel auswählbar gestattet ist, **dadurch gekennzeichnet, dass** Hinweise, die den mindestens ersten Korrespondenzknotens (24) identifizieren, zusammen mit dem ausgewählten Genauigkeitslevel gespeichert sind.

16. Verfahren nach Anspruch 15, das den zusätzlichen Vorgang des Übersetzens (86) der Positionshinweise, die auf dem ersten Genauigkeitslevel unterhalten werden, in Positionshinweise auf dem ausgewählten Genauigkeitslevel umfasst.

17. verfahren nach Anspruch 16, das ferner den Vorgang des Generierens am ersten Korrespondenzknoten (24) einer Anforderung (84) umfasst, um auf die Positionshinweise zuzugreifen, die dem Mobilgerät (12) zugeordnet sind.

18. Verfahren nach Anspruch 17, das ferner den Vorgang in Reaktion auf zugriff der Positionshinweise durch den ersten Korrespondenzknoten (24) des Generierens am ersten Korrespondenzknoten (24) einer Meldung (92) zur Kommunikation zum Mobilgerät (12) umfasst, die Meldung (92) von Werten in Reaktion auf die Positionshinweise.

## Revendications

1. Système de radiocommunication (10) comprenant une portion de réseau et une station mobile (12) qui peut se déplacer au sein d'une zone géographique ; la station mobile (12) comprenant un actionneur d'utilisateur (36) pouvant être actionné pour sélectionner un indice contenant un niveau de précision sélectionné auquel est autorisé l'accès au positionnement de la station mobile par un premier noeud correspondant (24) ; et un générateur de signal de création de profil (38) connecté audit actionneur d'utilisateur (36), ledit générateur (38) destiné à générer un signal de création de profil communiquant par le biais de ladite portion de réseau avec une base de données des profils (32) d'un élément de stockage des profils (28) pour stocker l'indice représenté par ledit signal de création de profil, **caractérisé en ce que** ledit indice comprend l'identification d'au moins ledit premier noeud correspondant (24) conjointement avec ledit niveau de précision sélectionné.

2. Système de radiocommunication (10) selon la revendication 1, dans lequel ledit élément de stockage des profils (28) est connecté à la portion de réseau du système de radiocommunication (10).

3. Système de radiocommunication (10) selon la revendication 1 ou 2, dans lequel ledit élément de stockage des profils (28) est en plus conçu pour recevoir des indications sur le positionnement de la station mobile (12) identifié au premier niveau de précision, ledit élément de stockage des profils (28) étant en plus destiné à stocker au niveau de la base de données des profils (32) l'indice de positionnement identifiant le positionnement de la station mobile (12).

4. Système de radiocommunication (10) selon la revendication 3, dans lequel la base de données des profils (32) stockée au niveau dudit élément de stockage des profils (28) est accessible de manière sélective par au moins le premier noeud correspondant (24) afin d'accéder, au niveau de précision sélectionné associé avec au moins le premier noeud correspondant (24), à l'indice de positionnement identifiant le positionnement de la station mobile (12).

5. Système de radiocommunication (10) selon la revendication 4, comprenant en plus un sélecteur de granularité (52) connecté audit élément de stockage des profils (28) et conçu pour recevoir l'indice pour une demande effectuée par au moins le premier noeud correspondant (24) pour accéder à l'indice de positionnement identifiant le positionnement de la station mobile (12), ledit sélecteur de granularité (52) étant destiné à indiquer le niveau de précision sélectionné auquel au moins le premier noeud correspondant (24) est autorisé à accéder au positionnement de la station mobile (12).

6. Système de radiocommunication (10) selon la revendication 5, dans lequel les indications du positionnement de la station mobile (12) identifiées au premier niveau de précision sont maintenues dans la base de données des profils (32) stockée au niveau dudit élément de stockage des profils (28) et dans lequel ledit sélecteur de granularité (52) est conçu pour granulariser les indications de positionnement de la station mobile (12) pour permettre au moins au premier noeud correspondant (24) d'accéder à l'indice de positionnement au niveau de précision sélectionné associé avec au moins le premier noeud correspondant (24) et maintenu au niveau de la base de données des profils (32).

7. Système de radiocommunication (10) selon la revendication 6, dans lequel ledit sélecteur de granularité (52) comprend en plus un convertisseur (54) pour convertir l'indice de positionnement maintenu au niveau de la base de données des profils (32) au premier niveau de précision en l'indice de positionnement au niveau de précision sélectionné.

8. Système de radiocommunication (10) selon la revendication 1, dans lequel ledit au moins premier noeud correspondant (24) comprend le premier noeud correspondant (24) et au moins un deuxième noeud correspondant et dans lequel la base de données des profils (32) stockée au niveau dudit élément de stockage des profils (28) comprend un indice identifiant le premier noeud correspondant (24) conjointement avec le niveau de précision autorisé sélectionné de celui-ci et un indice identifiant le deuxième noeud correspondant conjointement avec le niveau de précision autorisé sélectionné de celui-ci.

9. Système de radiocommunication (10) selon la revendication 1, dans lequel au moins le premier noeud correspondant (24) comprend le premier noeud correspondant (24) et au moins un deuxième noeud correspondant, dans lequel le premier noeud correspondant (24) est conçu pour faire partie d'un jeu de premiers noeuds correspondants et le deuxième noeud correspondant est conçu pour faire partie d'un jeu de deuxièmes noeuds correspondants et dans lequel l'indice stocké dans la base de données des profils (32) stockée au niveau dudit élément de stockage des profils (28) comprend un indice identifiant respectivement le premier et le deuxième noeuds correspondants stockés sous la forme d'un jeu de premiers noeuds correspondants et d'un jeu de deuxièmes noeuds correspondants.

10. Système de radiocommunication (10) selon la revendication 9, dans lequel au moins le premier noeud correspondant (24) a l'autorisation d'accéder de manière sélective à l'indice associé avec le jeu de premiers noeuds correspondants en générant une demande d' accès (84) à celui-ci.

11. Système de radiocommunication (10) selon la revendication 10, comprenant en plus un détecteur de demande d'accès (48) connecté audit élément de stockage des profils (28), ledit détecteur de demande d'accès (48) étant destiné à détecter la demande d'accès (84) générée par au moins le premier noeud correspondant (24).

12. Système de radiocommunication (10) selon la revendication 11, dans lequel ledit détecteur de demande d'accès (48) est en plus conçu pour autoriser de manière sélective l'accès par au moins le premier noeud correspondant (24) à l'indice stocké dans la base de données des profils (32) stockée au niveau dudit élément de stockage des profils (28).

13. Système de radiocommunication (10) selon la revendication 12, dans lequel l'accès à l'indice stocké au niveau de la base de données des profils (32) autorisé de manière sélective par ledit détecteur de demande d'accès (48) est réalisé en réaction aux valeurs du niveau de précision sélectionné stocké au niveau de la base de données (32) qui est conçue pour identifier le niveau de précision sélectionné auquel est autorisé l'accès au positionnement de la station mobile (12).

14. Système de radiocommunication (10) selon la revendication 1, dans lequel le niveau de précision sélectionné, auquel est autorisé l'accès au positionnement de la station mobile (12), est un niveau de précision inférieur au premier niveau de précision.

15. Procédé pour communiquer dans un système de radiocommunication (10) comprenant une portion de réseau et une station mobile (12) qui peut se déplacer au sein d'une zone géographique, dans lequel les indices comprenant un niveau de précision sélectionné, auquel un premier noeud correspondant (24) est autorisé à accéder au positionnement de la station mobile (12), sont stockés dans une base de données des profils (32), dans lequel sont maintenus des indices de positionnement identifiant le positionnement de la station mobile (12) à un premier niveau de précision et dans lequel l'accès par ledit premier noeud correspondant (24) aux indices associés au positionnement de la station mobile (12) est autorisé de manière sélective à un niveau de précision sélectionné, **caractérisé en ce que** l'indice identifiant au moins le premier noeud correspondant (24) est stocké conjointement avec ledit niveau de précision sélectionné.

16. Procédé selon la revendication 15, comprenant l'opération supplémentaire de conversion (86) de l'indice de positionnement, maintenu au premier niveau de précision, en un indice de positionnement au niveau de précision sélectionné.

17. Procédé selon la revendication 16, comprenant en plus l'opération de générer, au niveau du premier noeud correspondant (24), une demande (84) d'accès à l'indice de positionnement associé avec la station mobile (12).

18. Procédé selon la revendication 17, comprenant en plus l'opération, en réaction à l'accès à l'indice de positionnement par le premier noeud correspondant (24), de générer, au niveau du premier noeud correspondant (24), un message (92) destiné à être communiqué à la station mobile (12), le message (92) de valeurs en réaction à l'indice de positionnement.
